Europäisches Patentamt

European Patent Office

Office européen des brevets

(11) Veröffentlichungsnummer : **0 150 369**
**B1**

(12) **EUROPÄISCHE PATENTSCHRIFT**

(45) Veröffentlichungstag der Patentschrift :
06.07.88

(51) Int. Cl.⁴ : **G 21 C 19/32**

(21) Anmeldenummer : 84115091.5

(22) Anmeldetag : 10.12.84

(54) Kernreaktoranlage.

(30) Priorität : 26.01.84 DE 3402707

(43) Veröffentlichungstag der Anmeldung :
07.08.85 Patentblatt 85/32

(45) Bekanntmachung des Hinweises auf die Patenterteilung : 06.07.88 Patentblatt 88/27

(84) Benannte Vertragsstaaten :
CH DE FR LI SE

(56) Entgegenhaltungen :
DE-A- 1 812 088
FR-A- 2 439 865
FR-A- 2 444 996
GB-A- 1 288 073
US-A- 3 072 554
US-A- 3 168 443
KERNENERGIE, Band 23, Nr. 3, März 1980, Seiten 73-76, Berlin, DE; A. STURM: "Instandhaltung kerntechnischer Ausrüstungen von Kernkraftwerken mit Druckwasserreaktoren"

(73) Patentinhaber : Siemens Aktiengesellschaft Berlin und München
Wittelsbacherplatz 2
D-8000 München 2 (DE)

(72) Erfinder : Goetzmann, Claus, Dipl.-Ing.
Albert-Rupp-Strasse 8
D-8520 Erlangen (DE)
Erfinder : Rau, Peter, Dipl.-Ing. (FH)
Mittelehrenbach Nr. 89
D-8551 Leutenbach (DE)
Erfinder : Hau, Gerhard
Sigmund-Nathan-Strasse 6
D-8510 Fürth (DE)

## Beschreibung

Die Erfindung bezieht sich auf eine Kernreaktoranlage mit einem Reaktordruckbehälter, der einen aus Brennelementen bestehenden flüssigkeitsgekühlten Reaktorkern umschließt, mit einem Brennelement-Lagerbecken, das mit dem Reaktordruckbehälter über einen flutbaren Kanal verbunden ist, und mit einer Brennelement-Lademaschine, wobei der flutbare Kanal von einer demontierbaren Wanne gebildet wird, die an der Unterseite eine Öffnung zur Verbindung mit dem Reaktordruckbehälter aufweist, und wobei die Lademaschine mit einer von oben in die Wanne reichenden Strahlenabschirmung versehen ist und die Wanne an ihrer Unterseite eine weitere Öffnung zur Verbindung mit dem Brennelement-Lagerbecken aufweist.

Eine solche Kernreaktoranlage ist durch die US-A-3 072 554 bekannt. Es handelt sich dabei um einen gasgekühlten Reaktor, wobei der Reaktordruckbehälter von dem Boden und den Wänden einer die Reaktorgrube umfassenden Betonkonstruktion sowie einer metallischen Auskleidung der Wand- und Boden-Innenseiten gebildet wird. Die Wände der zugleich den biologischen Schild bildenden Betonkonstruktion sind über den Reaktordruckbehälter und auch ein geringes Stück über den darüber liegenden Gebäudeboden nach oben gezogen, und der so gebildete Raum wird von Wänden und Boden einer Wanne ausgefüllt, die mit Wasser als Abschirmmedium gefüllt ist. Damit das Wasser aus dem über den Reaktordruckbehälter stehenden Wassersäule nicht in das Reaktorinnere eindringen kann, ist der Deckel des Reaktordruckbehälters mit einer Vielzahl von durch Dichtstopfen abgeschlossenen Durchführungsstutzen versehen, die jeweils mit im Reaktorinneren befindlichen Brennelementen bzw. Brennelementbündeln fluchten. Der Wannenboden ist im Bereich des Deckels des Reaktordruckbehälteres ausgespart, die Wanne erstreckt sich seitlich über ebenfalls wassergefüllte Kammerräume und steht mit diesen über eine vertikale Schleusenöffnung in Verbindung. Die Kammerräume wiederum weisen unter der Wasseroberfläche befindliche Verbindungskanäle zu dem Brennelementlagerbecken auf. Die Brennelementlade- bzw. -Wechselmaschine kann, wie üblich, von oben jeden einzelnen der Durchführungsstutzen anfahren, mit einem Ladeschacht druckdicht mit den Stutzen gekuppelt werden. Es kann sodann durch ein im Inneren des Ladeschachtes verfahrbares Manipulatorwerkzeug der Dichtstopfen des jeweiligen Durchführungsstutzens entfernt und sodann ein Brennelement gezogen und der Dichtstopfen wieder eingeschraubt werden. Das gezogene Brennelement kann dann seitlich durch den Wasserraum der Wanne, d. h. abgeschirmt, verfahren werden, bis es oberhalb der Schleuse sich befindet, und es kann dann nach unten durch die Schleuse in einen von zwei Kammerräumen abgelassen werden. Ein Beladevorgang kann in umgekehrter Reihenfolge durchgeführt werden.

Dadurch, daß die Wanne bei der bekannten Kernreaktoranlage eine Auskleidung der nach oben gezogenen Betonkonstruktion ist, ergibt sich eine insgesamt größere Bauhöhe des Reaktorgebäudes, auch unter Berücksichtigung der Tatsache, daß der Ladeschacht der Brennelement-Lademaschine als Teleskop ausgeführt ist. Der Flur oberhalb der Oberkante des Reaktordruckbehälters ist dementsprechend höher gelegt, und es muß ein Mindestabstand zum Tragschienensystem der Brennelement-Lademaschine gegeben sein.

Der Erfindung liegt die Aufgabe zugrunde, bei der gattungsgemäßen Kernreaktoranlage den baulichen Aufwand für das mit Hilfe einer Flüssigkeit durchgeführte Umladen der Brennelemente zu verringern, und dies insbesondere bei Kleinreaktoren, wie sie z. B. als Heizreaktoren eingesetzt werden sollen, weil dabei die Kosten der Baulichkeiten im Verhältnis zu den relativ geringen Kosten des eigentlichen Kernreaktors stark ins Gewicht fallen.

Erfindungsgemäß wird die gestellte Aufgabe dadurch gelöst, daß die Wanne aus mehreren dicht miteinander verbindbaren und wieder trennbaren Teilen besteht. Eine vorteilhafte Weiterbildung ist im Patentanspruch 2 angegeben.

Die mit der Erfindung erzielbaren Vorteile sind vor allem darin zu sehen, daß die Wanne keine Beckenauskleidung ist, sondern in sich mit der erforderlichen Festigkeit ausgestattet werden kann. Der für die Wanne benötigte Raum kann dann, wenn kein Brennelement-Wechsel vorgenommen wird, für andere Zwecke genutzt werden. Die damit erreichbare Ersparnis an umbautem Raum ist beträchtlich. Die miteinander verbindbaren und wieder trennbaren Teile der Wanne können vorteilhaft aus Metall, insbesondere aus austenitischem Stahl, bestehen. Auch eine Mischbauweise kommt in Betracht, z. B. Ausführung aus Stahlteilen mit Kunststoffbeschichtung oder aus Kunststoffteilen mit Stahleinlagen zur Verstärkung, insbesondere an den Anschlußstellen.

Beim Gegenstand des Anspruchs 2 empfiehlt es sich, die Wanne mit ein Vielzahl von Kammern zu versehen, die mit Druckluft, Druckwasser oder Drucköl aufgeblasen werden können, um die gewünschte Kanalform zu erhalten.

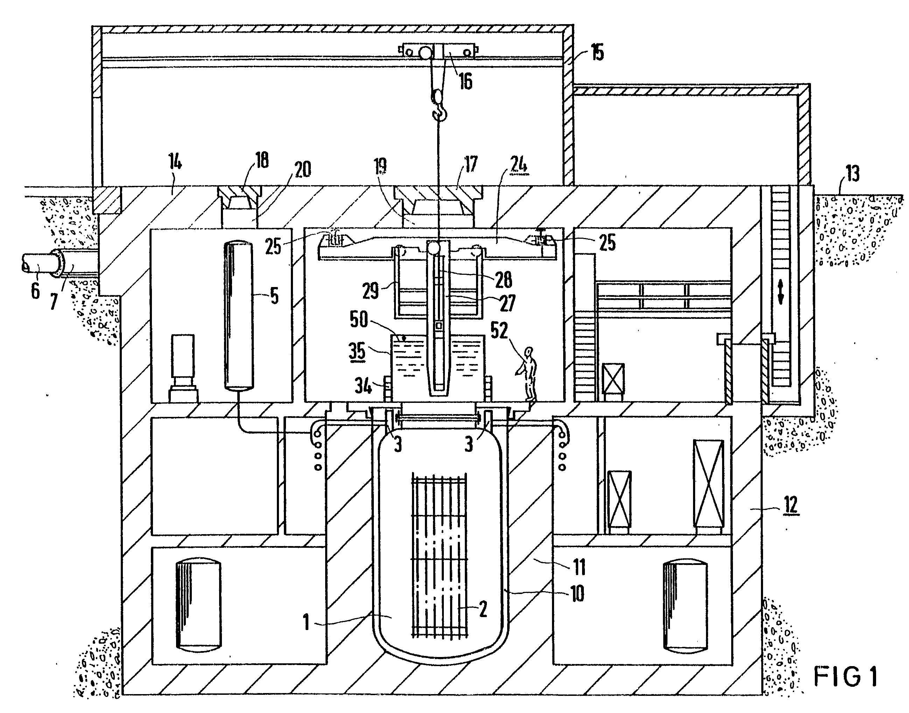

Zur näheren Erläuterung der Erfindung wird anhand der beiliegenden Zeichnung ein Ausführungsbeispiel beschrieben. Die Fig. 1 und 2 bzw. 3 und 4 zeigen erfindungsgemäße Kernreaktoranlagen in zwei zueinander senkrechten Vertikalschnitten in zwei verschiedenen Ausführungen.

Die Kernreaktoranlage umfaßt einen Heizreaktor für etwa 100 MW (thermisch). Zu diesem gehört ein Reaktordruckbehälter 1, der den Reaktorkern 2 und nicht weiter dargestellte Wärmetauscher einschließt. Über diese wird Wärme mit Hilfe von Druckwasser eines Zwischenkreises über Durchführungen 3 aus dem Reaktordruckbehälter 1 abgeführt. Die Durchführungen sind mit Sekundärwärmetauschern 5 verbunden, an die Warmwasserleitungen 6 mit einer Isolierung 7 zur Versorgung von Wohngebieten, Industrieanlagen oder dergleichen angeschlossen sind.

Der Reaktordruckbehälter 1 sitzt in der Reaktorgrube 10 eines biologischen Schildes 11. Dies ist die zum Beispiel 2 m dicke Betonwand eines Reaktorgebäudes 12, das über etwa 2/3 seiner Höhe in das Erdreich eingelassen ist, dessen Oberfläche bei 13 angedeutet ist. Das Reaktorgebäude 12 besitzt eine verstärkte Betondecke 14 in der Höhe der Erdoberfläche 13. Darüber ist ein Hantierungsgebäude 15 errichtet, das mit einem Kran 16 zum Transport von Großkomponenten ausgerüstet ist. Für den Zugang zum unteren Teil des Reaktorgebäudes 12 sind in der Decke 14 mit Deckeln 17 und 18 verschlossene Öffnungen 19 und 20 angeordnet.

An der Unterseite der Decke 14 ist eine Lademaschine 24 an Schienen 25 nach Art eines Portalkranes verfahrbar befestigt. Die Maschine besitzt einen abgeschirmten Ladeschacht 27, der eine Hubeinrichtung 28 umschließt. Um den Ladeschacht 27 herum ist eine Bedienungsgalerie 29 angeordnet. Die Lademaschine 24 dient vor allem zum Brennelementwechsel, bei dem verbrauchte Brennelemente aus dem Reaktordruckbehälter 1 nach dem Abnehmen des Reaktordeckels 30 in ein wassergefülltes Brennelement-Lagerbecken 31 transportiert werden, damit sie dort in einem Lagergestell 32 bis zum Abtransport aufbewahrt werden können.

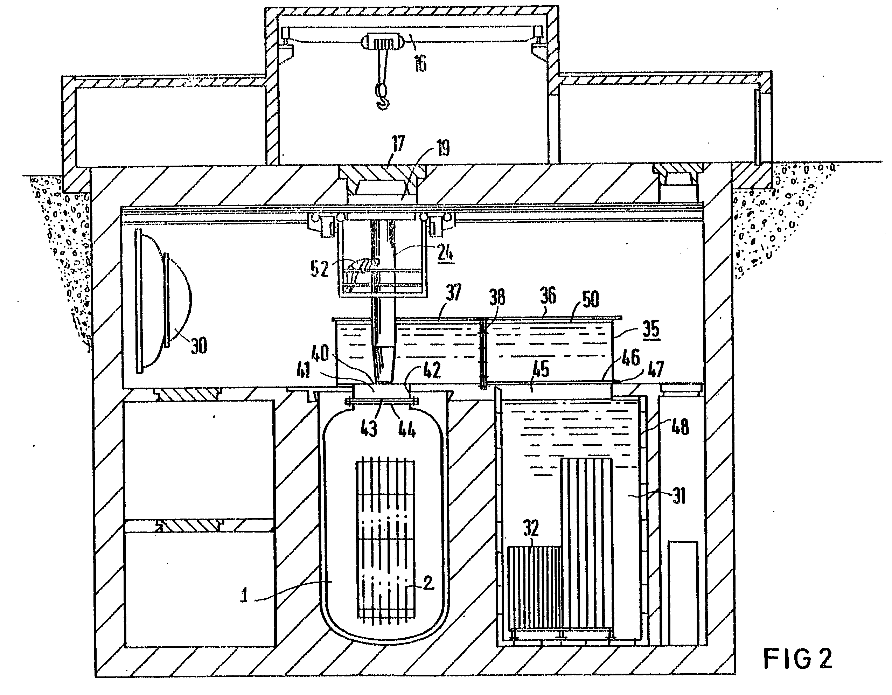

Die Verbindung zwischen dem Reaktordruckbehälter 1 und dem Brennelement-Lagerbecken umfaßt eine mit sogenannten Setzsteinen 34 fixierte Wanne 35, die aus zwei etwa gleichlangen Teilstücken 36 und 37 besteht. Die beiden Teilstücke aus rostfreiem Stahl haben den gleichen, aus der Fig. 2 ersichtlichen Rechteckquerschnitt. Sie sind mit Flanschen 38 an den einander zugekehrten Stirnseiten dicht miteinander verbunden.

Der Teil 37 der Wanne 35 besitzt an seiner Unterseite 40 eine Öffnung 41, die durch einen Stutzen 42 mit einem Flansch 43 definiert ist. Der Flansch 43 kann dicht mit dem Deckelflansch 44 des Reaktordruckbehälters 1 verbunden werden.

Die Unterseite 46 des Wannenteils 36 ist mit einem Flansch 47 versehen. Dieser umgibt eine Öffnung 45, die dicht mit der Wannenauskleidung 48 des Brennelement-Lagerbeckens 31 verbunden werden kann.

Die Wanne 35 bildet in der dargestellten, betriebsbereit montierten Lage einen dichten Kanal zwischen dem Inneren des Reaktordruckbehälters 1 und dem Brennelement-Lagerbecken 31. Dieser Kanal kann nach dem Aufsetzen der Wanne 35 mit Wasser gefüllt werden, so daß der Flüssigkeitsspiegel 50 erreicht wird. Damit ist es möglich, die Brennelemente aus dem Reaktorkern 2 in die Lademaschine 24 unter der Abschirmung des Wassers einzuziehen und in das Brennelement-Lagerbecken 31 zu transportieren. Zu diesem Zweck ragt der Ladeschacht 27 der Lademaschine 24, wie insbesondere die Fig. 1 deutlich zeigt, in die Wanne 35 unter die Wasseroberfläche 50.

Damit ist durch den Ladeschacht 27 und das Wasser im Kanal 35 eine ausreichende Abschirmung sichergestellt, so daß das bei 52 angedeutete Personal die Arbeit des Brennelement-Wechselns ohne besondere Schutzmaßnahmen durchführen und überwachen kann.

Nach dem Brennelement-Wechsel kann die Wanne 35 entleert werden. Dann lassen sich die Teile 36 und 37 ineinanderstapeln und im Reaktorgebäude verstauen, zum Beispiel hochkant an der Stelle des dann wieder auf dem Reaktordruckbehälter 1 sitzenden Deckels 30. Damit steht der Raum oberhalb des Reaktordruckbehälters und des Brennelement-Lagerbeckens für weitere Arbeiten, zum Beispiel für den Abtransport verbrauchter Brennelemente in Brennelement-Transportbehältern zur Verfügung, die durch die Öffnung 19 ausgeschleust und mit dem Kran 16 abtransportiert werden.

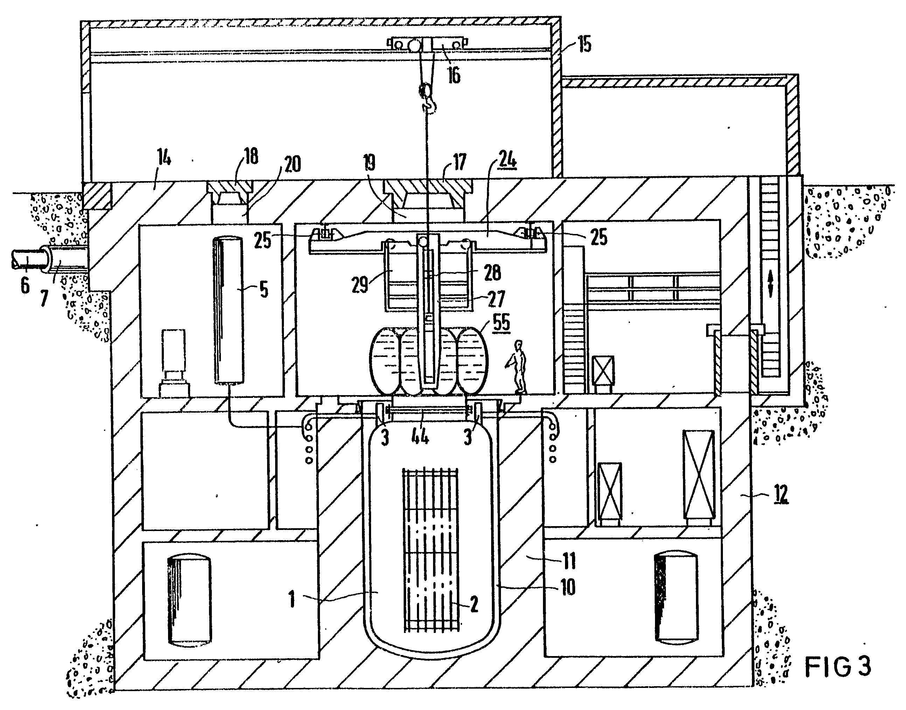

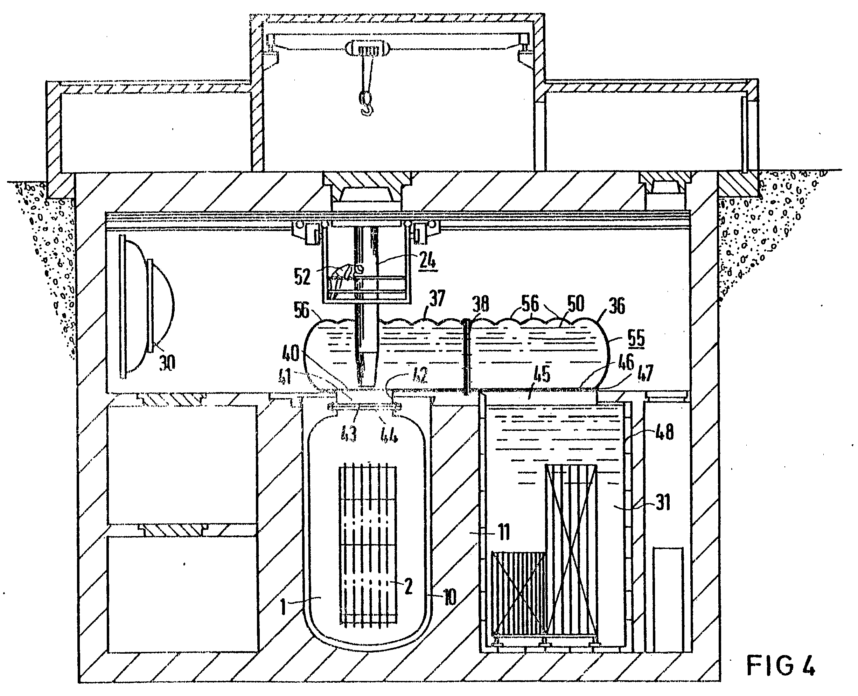

Bei der in den Fig. 3 und 4 dargestellten Ausführungsform ist eine Wanne 55 aus flexiblem Material vorgesehen, das als Schlauch mit einer Vielzahl von Kammern 56 verarbeitet ist und mit Druckluft, Druckwasser oder Drucköl aufgeblasen wird, um die gewünschte Kanalform zu erhalten. Die Anschlußstellen am Reaktordruckbehälter 1 und am Lagerbecken 31 können in gleicher Weise wie bei den Blechteilen gestaltet sein. Ferner kann auch hier eine den Transport erleichternde Unterteilung mit einer Flanschverbindung 38 zwischen den Teilen 36 und 37 vorteilhaft sein.

**Patentansprüche**

1. Kernreaktoranlage mit einem Reaktordruckbehälter (1), der einen aus Brennelementen bestehenden flüssigkeitsgekühlten Reaktorkern (2) umschließt, mit einem Brennelement-Lagerbecken (31), das mit dem Reaktordruckbehälter über einen flutbaren Kanal verbunden ist, und mit einer Brennelement-Lademaschine (24), wobei der flutbare Kanal von einer demontierbaren Wanne (35, 55) gebildet wird, die an der Unterseite eine Öffnung (41) zur Verbindung mit dem Reaktordruckbehälter (1) aufweist, und wobei die Lademaschine (24) mit einer von oben in die Wanne reichenden Strahlenabschirmung (Ladeschacht 27) versehen ist, und die Wanne (35, 55) an ihrer Unterseite eine weitere Öffnung (45) zur Verbindung mit dem Brennelement-Lagerbecken (31) aufweist, dadurch gekennzeichnet, daß die Wanne (35, 55) aus mehreren dicht miteinander verbindbaren und wieder trennbaren Teilen (36, 37) besteht.

2. Kernreaktoranlage nach Anspruch 1, dadurch gekennzeichnet, daß eine Wanne (55) mit Wänden aus aufblasbarem flexiblem Material zur Aufnahme eines Druckmittels mindestens stellenweise schlauchförmig mit Kammern (56) ausgebildet ist und daß die Wände der Wanne (55) unter der Einwirkung des Druckmittels am Reaktorgebäude anliegen.

**Claims**

1. Nuclear reactor plant having a reactor pressure vessel (1) which surrounds a liquid-cooled reactor core (2) consisting of fuel elements, having a fuel element storage reservoir (31) which is connected with the reactor pressure vessel by way of a floodable channel and having a fuel element charging machine (24), in which the floodable channel is formed by a trough (35, 55) which can be disassembled and which has on the underside an opening (41) for the connection with the reactor pressure vessel (1) and in which the charging machine (24) is provided with a radiation shielding (charging shaft 27) which extends from the top into the trough and the trough (35, 55) has on its underside a further opening (45) for the connection with the fuel element storage reservoir (31), characterised in that the trough (35, 55) consists of several parts (36, 37) which can be connected with each other in a sealed manner and can be separated again.

2. Nuclear reactor plant according to claim 1, characterised in that a trough (55) is formed with walls of inflatable, flexible material for receiving a pressure medium, at least in places, in a tubular form with chambers (56) and in that the walls of the trough (55) rest against the reactor building under the influence of the pressure medium.

**Revendications**

1. Installation à réacteur nucléaire comprenant une cuve sous pression de réacteur (1), qui entoure un cœur de réacteur (2) constitué d'assemblages combustibles et refroidi par du liquide, une piscine de stockage (3) d'assemblages combustibles, qui communique avec la cuve sous pression du réacteur par un canal susceptible d'être empli de liquide, et une machine de chargement (24) des assemblages combustibles, le canal susceptible d'être empli de liquide étant formé d'un bassin (35, 55) démontable et ayant sur le côté inférieur un orifice (41) de mise en communication avec la cuve sous·pression de réacteur (1), la machine de chargement (24) étant munie d'un blindage vis-à-vis du rayonnement (puits de chargement 27) allant du haut jusqu'au bassin, et le bassin (35, 55) ayant sur son côté inférieur un autre orifice (45) de mise en communication avec la piscine de stockage (31) d'assemblages combustibles, caractérisée en ce que, le bassin (35, 55) est constitué de plusieurs parties (36, 37) qui peuvent être reliées entre elles de manière étanche et qui peuvent être séparées à nouveau.

2. Installation à réacteur nucléaire suivant la revendication 1, caractérisée en ce que, un bassin (55), ayant des parois en matériau souple et gonflable, et destiné à recevoir un fluide sous pression, est constitué au moins par endroits sous la forme d'un conduit souple ayant des chambres (56) et en ce que les parois du bassin (55) s'appliquent au bâtiment du réacteur sous l'effet du fluide sous pression.

FIG 1

FIG 2

0 150 369

FIG 3

0 150 369

FIG 4